# EUROPEAN PATENT APPLICATION

(11) **EP 1 661 873 A1**
(43) Date of publication of application: **31.05.2006**
(21) Application number: 04027884.8
(22) Date of filing: 24.11.2004
(51) Int. Cl.: C04B 41/49, C09D 183/06, C09D 183/08, C08L 83/08

(54) **Anti-graffiti coating**

(71) Applicant: Danish Technological Institute, Materials, Materials Testing, 8000 Aarhus C (DK)
(72) Inventor: Zwieg, Thomas, 8300 Odder (DK)
(74) Representative: Gregersen, Niels Henrik

(57) **Abstract**

Coatings, comprising a resin and a hardener, wherein the resin is obtained by reacting nano-particle sol(s) of organofunctional silanol(s) exhibiting reactivity towards amino, amide, nitrile or/and isocyanate groups, with alkyl siloxane(s) and optionally organic binding agents, both exhibiting reactivity towards amino, amide, nitrile or/and isocyanate groups; and wherein the hardener comprises a component A comprising siloxane(s) having amino, amido, isocyanate and/or nitrilo groups; and/or comprising polyisocyanate; as well as a component B comprising one or more of an α,ω-aminofunctional, α,ω-amido-functional, α,ω-isocyanate-functional and α,ω-nitrilo-functional polysiloxane, is provided. The coatings may either be obtained as a one component or as a two component coating which are useful as permanent anti-graffiti coatings.

## Description

### Field of the Invention

The present invention relates to surface coatings with anti-graffiti, non-stick properties manufactured by sol-gel technology.

### Background of the Invention

The application of graffiti and other undesirable slogans at surfaces of e.g. trains or buildings is a huge problem, which causes high economical damages. The costs are mostly related to the removal of the graffiti. This labour intensive process is usually carried out by hand and partially involves the use of very aggressive solvents. New technologies for improving the removal of these graffiti layers have therefore been in focus for international research and development in the last few decades.

Conventionally available technologies for removing graffiti include the application of chemical cleaners or sand blasting. As to the chemical cleaners usually aggressive solvents which dissolve the graffiti paint are applied. The dissolved paint compounds are subsequently washed away with water and thus may sink into the ground or soil. In the soil these paint compounds present an environmental risk.

Blasting often causes the removal of parts of the substrate and an increase of the substrate surface roughness. This Furthermore the original surface paints may get destroyed as well.

Surface coatings offer the possibility to protect the construction against graffiti vandalism. In the art a distinction between temporary protecting coatings and permanent protecting coatings is made.

Temporary protecting coatings are typically based on sugar solutions or wax films, but also water based dispersions are described (DE 196 22 562). These coatings have the disadvantage of being washed away under every graffiti removing procedure. Subsequently a new coating has to be applied.

Permanent protecting coatings, which overcome this cost intensive problem, are well known. Examples are described e.g. in US 4,169,088, DE 199 39 152, DE 100 28 847 and DE 19955 047.

Typically permanent protecting coatings require the use of solvents in order to remove the graffiti paint. Often the anti graffiti-coating supplier recommends a special solvent of own brand. If different graffiti removers are applied, commercially available coatings show partially dissolution and the graffiti protection can be lost.

The sol-gel technology is a universal one- or multi-layer surface treatment technology, which offers the one-step formation of highly branched, three-dimensional organic and inorganic polymer structures. Due to these highly cross-linked structures sol-gel coatings show a very strong resistance against solvents and cleaning agents. Furthermore, if these coatings are stabilised against hydrolysis, a high weathering protection is attainable. The disadvantages of using sol-gel coatings are the frequent requirements of high curing temperatures, the low solid compound content of approximately 30 % and the high content of volatile organic compounds. This last mentioned disadvantages was partially solved in DE 100 28 847.

### Object of the Invention

It is an object of the present invention to solve the above mentioned problems by providing an improved coating for the protection against graffiti vandalism.

The newly developed anti-graffiti coating according to this invention is a permanent protecting coating, which allows several graffiti painting and removing cycles. In contrast to permanent anti-graffiti coatings of known art, the coating system of this invention offers the unique possibility of graffiti paint removing using tap water only without application of any form of chemical aggressive solvents.

The process for removing the graffiti applied onto an anti-graffiti coating according to the present invention is carried out by gentle cleaning with a water pressure gun at low pressure, which does not damage the substrate. Due to the very low adhesion of the graffiti paints to the protecting coatings according to the present invention, which is achieved by the implementation and combination of a number of chemically different non-polar compounds in the coating system, graffiti paints can be removed from the surface in the form of pieces of solid foil. The use environmentally hazardous solutions for removal of the graffiti paint and the leakage of these solutions into plants and groundwater is completely avoided by the inventive coating. Alternatively the graffiti paint or tags can also successfully be removed by applying ordinary, commercially available tapes. Small rests of graffiti paint remaining after the water cleaning process, e.g. resulting from painting splashes, can also successfully be removed by tapes.

The anti graffiti coating of this invention is either a one component or a two component, room temperature curing coating. Within two hours the coating has been cured to an extent that allows normal handling of the substrate surface, and after only 12 hours of curing a complete protection is obtained. The coating is applied by conventional spraying or rolling technology, typically with a coating thickness of 1 - 20 microns.

The coating is almost 100 % transparent and has an almost invisible finish with very low gloss. The highly branched, three-dimensional organic and inorganic polymer-structure makes the coating resistant to nearly all kind of penetration of paints, dyes, marker fluids and solutes of substances commonly used by graffiti vandals. Due to the fact that the coatings are stabilised against hydrolysis, a high weathering resistance and durability is obtained.

### Brief description of the Invention

The above mentioned object is fulfilled by the invention set out below:
In a first aspect, the present invention relates to a process for the manufacture of an anti-graffiti resin as set out in claim 1.
In a second aspect, the present invention relates to an anti-graffiti resin obtainable by such a process as set out in claim 8 and 9.
In a third aspect, the present invention relates to the use of an anti-graffiti resin for an anti-graffiti coating system as set out in claim 10.
In a fourth aspect the present invention relates to a process for the manufacture of an anti-graffiti hardener as set out in claim 11.
In a fifth aspect, the present invention relates to an anti-graffiti hardener obtainable by such a process as set out in claim 16 and 17.
In a sixth aspect, the present invention relates to the use of an anti-graffiti hardener for an anti-graffiti coating system as set out in claim 18.
In a seventh aspect, the present invention relates to an anti-graffiti coating system as set out in claim 19.
In an eighth aspect, the present invention relates to a process for the manufacture of an anti-graffiti coating an as set out in claim 21.
In a ninth aspect, the present invention relates to an anti-graffiti coating as set out in claim 22.
In a tenth aspect, the present invention relates to the use of an anti-graffiti coating against graffiti vandalism as set out in claim 27.
And finally, in a eleventh aspect, the present invention relates to the use of an anti-graffiti coating for non-anti-graffiti, anti-adhesive purposes as set out in claim 31.

### Detailed Description of the Invention

In this description and the appended claims, the term "graffiti vandalism" is to be interpreted as any kind of application of any kind of coloured (including black) layer of a substance, e.g., paint, dyes, lacquers etc. to the surface of a structure without the consent and/or against the desire of the owner or administrator of said structure. Furthermore, all percentages and ratios set out herein are given in percent weight/weight unless otherwise specified.

According to the invention in the manufacture of the coating for use against graffiti the technology of sol-gel systems is used, involving reactions of a combination of polymerized organic modified silicon alkoxides (R-Si(OR)₃), polymerized silicon alkoxides Si(OR)₄ and organic polymers. In this way hybrid layers will be created, forming an inorganic-organic coating network at the surfaces.

As mentioned above, the coating system for use against graffiti is either a two-component system or a one-component system. The two-component system comprises a resin and a hardener. Prior to the application on a surface of a structure which is to be protected against graffiti, the resin and the hardener are mixed in order to obtain the coating. The one component coating according to the present invention may be used as is upon stirring.

### The anti-graffiti resin

In a first aspect according to the present invention a process for the manufacture of a resin of an anti-graffiti coating system is provided.

The process for the manufacture of the resin according to the present invention comprises the mixing of:
i) one or more nano-particle sol(s) comprising nano-particles of organofunctional silanol(s) exhibiting reactivity towards amino, amido, nitrilo or/and isocyanate groups; and
ii) optionally one or more organic binding agents exhibiting reactivity towards amino, amido, nitrilo or/and isocyanate groups; and
iii) one or more alkyl siloxane(s), optionally substituted with fluorine atom(s) in the alkyl moity; and
iv) optionally a catalyst; and
v) optionally a UV light absorbing system.

The general processing steps for the sol-formation include first the partial hydrolysis of alkoxides to form reactive monomers and second the polycondensation of these monomers to form colloid like oligomers or nanoparticles.

The nano-particle sol(s) used in step i) is/are obtained by hydrolysis of an organofunctional alkoxy silane in order to obtain the organofunctional silanol(s) in the form of nano-particle sol(s). The hydrolysation may be performed by using dilute acid, such as dilute hydrochloric acid.

The technique for the manufacture of the starting nano-particle sol(s) is a well-documented subject in the literature. For general overview reference is made to: Brinker, C.J.; Scherer, G.: Sol-Gel Science, the Physics and Chemistry of Sol-Gel Processing; Academic Press, 1990, Arkles, B.: Silicon Esters, Encyclopedia of Chemical Technology; Volume 22 , 69-81, Whiley, 1997.

It is an essential feature of the resin of the present invention, that the organofunctional silanols used in the process for the manufacture said resin exhibit reactivity towards amino, amido, nitrilo and/or isocyanate groups.

Examples of classes of organofunctional silanols exhibiting reactivity towards amino-, amide, nitrile or/and isocyanate groups are organofunctional silanols having vinyl groups, epoxide groups, methacrylic groups, hydroxide groups, carboxylic groups and glycidylic groups.

Specific examples of the organofunctional silanols which are useful in the process for the manufacture of the resin according to the present invention are: 3-glycidyloxypropyltrimethoxy silane, 3-glycidyloxypropyltriethoxy silane, vinyltrimethoxy silane, vinyltriethoxy silane and 3-methacryloxypropyltrimethoxy silane, tetraethoxy silane, tetramethoxy silane, carboxytrimethoxysilane and carboxytrimethoxysilane.

Although it is preferred to employ only a single organofunctional silanol in the process for the manufacture of the anti-graffiti resin, a mixture of one or more organofunctional silanols or non-organofunctional silanols, e.g. tetraethoxy silane is also contemplated.

The ratio of amount of organofunctional silanol(s) : amount of total resin is within the range 0.05 - 20, such as 0.1 - 15, preferably 0.2 - 8.

In the process for the manufacture of the anti-graffiti resin a binding agent may optionally be employed. As for the organofunctional silanols the binding agent, if present, exhibits reactivity towards amino, amide, nitrile or/and isocyanate groups .

In order for the binding agent to possess such reactivity, the binding agent may have functional groups selected from the group comprising: hydroxide groups, carboxylic groups, glycidyl groups, epoxide groups, vinyl groups, (meth)acrylic groups.

Specific examples of useful binding agents which are useful in the process for the manufacture of the resin according to the present invention are: epoxide resins like bisphenol A diglycidylether and its derivates, poly(meth)acrylates, saturated and unsaturated polyesters of di-, tri- and tetra functional polyols, and di- and tricarboxylic acids.

Although it is preferred that only one type of binding agent is used in the process for the manufacture of the resin according to the present invention, a combination of two or more binding agents is also contemplated. The ratio amount of organic binding agent to amount of total resin is within the range 3:1 up to 1:4, preferably 1:1 to 1:2.

Furthermore the resin part of the anti-graffiti coating according to the present invention includes one or more alkyl siloxanes.

It should be noted that in the present application the terms "siloxane" and "silane" are used interchangeable. Such a less strict nomenclature is well established in the art of silicon chemistry, and a person skilled in the art will be able to deduce the meaning from the context.

The alkyl siloxanes may optionally be substituted by one or more fluorine atoms in the alkyl moity. Preferably, the substitution with fluorine atoms, if present, is in the form of trifluoro methyl groups.

Classes of alkyl siloxanes which are useful in the process for the manufacture of the resin according to the present invention are: alkyltrialkoxy silanes and dialkyldialkoxy silanes.

Examples of useful alkyl siloxanes for use in the process for the manufacture of the resin according to the present invention are: methyltrimethoxy silane, methyltriethoxy silane, dimethyldimethoxy silane, dimethyldiethoxy silane, ethyltrimethoxy silane, ethyltriethoxy silane, propyltrimethoxy silane, propyltriethoxy silane, isobutyltrimethoxy silane, isobutyltriethoxy silane, tert-butyltrimethoxy silane, tert-butyltriethoxy silane, pentyltrimethoxy silane, pentyltriethoxy silane, n-hexyltrimethoxy silane, n-hexyltriethoxy silane, octyltrimethoxy silane, octyltriethoxy silane, decyltrimethoxy silane, decyltriethoxy silane, hexadecyltrimethoxy silane, hexadecyltriethoxy silane, octadecyltrimethoxy silane, octadecyltriethoxy silane, phenyltrimethoxy silane, phenyltriethoxy silane.

However, aryl substituted siloxanes, e.g. aryltrialkoxy silanes and diaryldialkoxy siloxanes may be used as well.

Preferred alkyl siloxanes for use in the process for the manufacture of the resin according to the present invention are: ethyltrimethoxy silane, ethyltriethoxy silane, propyltrimethoxy silane, propyltriethoxy silane, isobutyltrimethoxy silane, isobutyltriethoxy silane, tert-butyltrimethoxy silane, tert-butyltriethoxy silane, pentyltrimethoxy silane, pentyltriethoxy silane, n-hexyltrimethoxy silane, n-hexyltriethoxy silane, octyltrimethoxy silane, octyltriethoxy silane.

The alkyl siloxan(s) is/are present in the resin in an amount 5 - 40%, preferably 15-35% in relation to the resin.

According to the process for the manufacture of the resin of the present invention, a catalyst may be included in the mixing process. If present, such catalyst can be selected from the group comprising: metalorganics e.g. dibutyltindilaurate, dibutyltindiacetate, tetrabutyltitanate, tetraisopropyltitanate, aluminium acetates like e.g. aluminium acetylacetonate, aluminium ethylacetoacetate bis(acetylacetonate), aluminium bis(ethylacetoacetate) acetylacetonate, aluminium di-n-butoxide monoethyl acetoacetate, aluminum formates, aluminum oxalates, zinc octoate and quaternary ammonium hydroxide, preferably the catalyst is selected from the group comprising dibutyltindilaurate, dibutyltindiacetate, tetrabutyltitanate and tetraisopropyltitanate,

If present, the catalyst is included in an amount of 0.05-5%, preferably 0.2-2 % in relation to the resin.

Optionally the resin part of the anti-graffiti coating may include an UV light absorbing system. By including such UV light absorbing system, the surface to be protected against graffiti will also be protected against UV radiation when exposed to sun light.

The UV light absorbing system may be selected from a combination of a compound from the group comprising e.g. Tinuvin® 384, Tinuvin® 400 and a hindered amine light stabilizer (HALS), e.g. Tinuvin® 123 or Tinuvin® 292; all commercially available from Ciba AG.

However, the type of the specific UV light absorbing system is not critically as long as the system does not detrimentally interfere with the other components of the resin. A person skilled in the art will be capable to select other useful UV light absorbing systems.

If included in the resin, the UV light absorbing system will be present in an amount of 0.1 - 5 %, in relation to the resin.

In a preferred embodiment of the process for the manufacture of the resin according to the present invention, the nano-particle is selected from the group comprising organofunctional silanols having vinyl groups, epoxide groups, methacrylic groups, hydroxide groups, carboxylic groups and glycidyl groups; and wherein the binding agent is selected from the group of compounds comprising vinyl groups, epoxide groups, methacrylic groups, hydroxide groups, carboxylic groups and glycidylic groups; and wherein the alkyl siloxane having one or more alkyl chains comprising 1 - 18 carbon atoms, preferably 1 - 5 carbon atoms.

In another preferred embodiment of the process for the manufacture of the resin according to the present invention the nano-particle comprises hydrolysed GPTS (3-glycidyloxypropyltrimethoxy silane) and the binding agent is Bisphenol A diglycidylether, and the alkyl siloxane is n-propyltrimethoxysilane.

In yet another preferred embodiment of the process for the manufacture of the resin according to the present invention the nano-particle comprises hydrolysed GPTS (3-glycidyloxypropyltrimethoxy silane), and the alkyl siloxane is n-propyltrimethoxy silane, and dibutyltindiacetate (DBTA) is added as a catalyst in step iv), and step ii) is omitted.

In a still further preferred embodiment of the process for the manufacture of the resin according to the present invention the nano-particle comprises hydrolysed GPTS (3-glycidyloxypropyltrimethoxy silane), and the binding agent is a hydroxyl group containing poly(meth)acrylate, and the alkyl siloxane is n-propyltrimethoxy silane.

In yet a still further preferred embodiment of the process for the manufacture of the resin according to the present invention the nano-particle comprises hydrolysed GPTS (3-glycidyloxypropyl trimethoxy silane), and the binding agent is a hydroxyl group containing poly(meth)acrylate, and the alkyl siloxane is n-propyl trimethoxy silane and dibutyltin diacetate (DBTA) is added as a catalyst in step iv).

In a still further preferred embodiment of the process for the manufacture of the resin according to the present invention, the nano-particle comprises hydrolysed methyltrimethoxysilane, and the alkyl siloxane is n-propyltrimethoxy silane, and the binding agent is a hydroxyl group containing poly(meth)acrylate.

In the process for the manufacture of the resin according to the present invention, the above mentioned components are simply mixed and stirred.

Accordingly, in the process for the manufacture of the resin according to the present invention one or more of the nano-particle sol(s) comprising nano-particles of organofunctional silanol(s) exhibiting reactivity towards amino, amide, nitrile or/and isocyanate groups are optionally blended with specific organic binders, if present, and stirred until a homogeneous mixture is achieved. Afterwards, the sol-organic binder mixture is mixed with the above mentioned alkyl siloxanes, stirred until a homogeneous mixture again is obtained. Finally and optionally a catalyst and/or an UV light absorbing system is stirred into this mixture until the blend is homogeneous. After this procedure the first coating component, the resin part is obtained.

A second and third aspect of the present invention relates to a resin obtainable by the process described above and the use of such resin for an anti-graffiti coating system, respectively.

Thus, such resin according to the present invention comprises a mixture of the following components:
i) one or more nano-particle sol(s) comprising nano-particles of organofunctional silanol(s) exhibiting reactivity towards amino, amido, nitrilo or/and isocyanate groups; and
ii) optionally one or more organic binding agents exhibiting reactivity towards amino, amido, nitrilo or/and isocyanate groups; and
iii) one or more alkyl siloxane(s), optionally substituted with fluorine atom(s) in the alkyl moity; and
iv) optionally a catalyst; and
v) optionally a UV light absorbing system.
   - each of which may be of the above described types, said mixture being manufactured as set out above.

Accordingly, the resin according to the present invention comprises one or more nano-particle sol(s) comprising organofunctional silanol(s) exhibiting reactivity towards amino, amide, nitrile or/and isocyanate groups; and optionally one or more organic binding agents exhibiting reactivity towards amino, amide, nitrile or/and isocyanate groups; and one or more alkyl siloxane(s), optionally substituted with fluorine atom(s) in the alkyl moity, wherein the binding agent(s) and the alkyl siloxane(s) are weakly linked to the hydroxylic group of the nano-particle silanol(s) by interactions via secondary bonds. Such secondary bonds may constitute weak hydrogen linking and/or van der Waal forces.

### The anti-graffiti hardener

In a fourth aspect according to the present invention a process for the manufacture of a hardener of an anti-graffiti coating system is provided.

The process for the manufacture of the hardener according to the present invention comprises the mixing of:
i) a component A acting as binding/crossbinding agent, and comprising one or more siloxane(s) having amino, amido, isocyanate and/or nitrilo groups; and/or comprising polyisocyanate, said amino groups of said siloxane(s), if present as primary amino groups, optionally being blocked as ketimine groups; and
ii) a component B comprising one or more of an α,ω-amino functional, α,ω-amido functional, α,ω-isocyanate functional and α,ω-nitrilo functional polysiloxane, said amino groups of said α,ω-amino functional polysiloxane, if present as primary amino groups, optionally being blocked as ketimine groups; and
iii) optionally one or more solvents; and
iv) optionally a UV light absorbing system;
with the proviso that if component A comprises polyisocyanate, then the terminal primary amino groups comprised in component B, if present, and/or the primary amino groups comprised in component A, if present, prior to the admixing in the hardener composition are protected by being blocked as ketimine groups.
The component A used as a binding/cross linking agent in step i) in the process for the manufacture of an anti-graffiti hardener according to the present invention comprises amino, amido, nitrilo or/and isocyanate groups and/or comprises polyisocyanate.

Examples of such binding/cross linking agent used in step i) according to the process for the manufacture of the hardener according to the present invention are: 3-aminopropyltrimethoxy silane, 3-aminopropyltriethoxy silane, 2-aminoethyl-3-aminopropyltrimethoxy silane, bis(3-triehoxysilylpropyl)amine, N-(n-butyl)-3-aminopropyltrimethoxy silane, N-(2-aminoethyl)-3-aminopropyltrimethoxy silane, N-(6-aminohexyl)-3-aminopropyl-trimethoxy silane, 4-aminobutyltriethoxy silane, 3-isocyanantopropyltriehtoxy silane and amidinothiourea.

Although it is preferred that component A which is used in the process for the manufacture of the hardener according to the present invention only comprises one compound, a combination of two or more compounds acting as cross linking and binding agent is also contemplated.

As mentioned above, the siloxane(s) of component A may comprise amino groups. If the siloxane(s) of component A comprise primary amino groups, such primary amino groups may be present as "masked" primary amino groups in the form of a ketimine group. In the present description and the appended claims the term "masked" amino groups is used interchangeable with the term "blocked" amino groups; and these terms are to be interpreted as ketimine groups which notoriously easily hydrolyse to primary amino groups in the presence of moisture. Thus, in the present description and the appended claims the term "blocked amino group" in fact means that the primary amino group of the component of the hardener, if present, prior to being admixed in the hardener composition, is converted to a "ketimine group".

The blocking of the primary amino groups of component A, if present, serves two purposes. First, it is necessary to block these primary amino groups if component A of the hardener comprises polyisocyanate because of the high reactivity of primary amino groups towards polyisocyanate. Secondly, the blocking of the primary amino groups of component A allows for making one component coatings as described later.

The blocking of the primary amino groups, if present, comprised in component A follows the same procedure as the one set out below in respect of the blocking of the terminal primary amino groups optionally comprised in component B of the hardener of the present invention.

The component B of step ii) comprising the α,ω-amino-functional polysiloxane(s) used in the process for the manufacture of said harderer comprises terminal amino, amido, nitrilo or/and isocyanate groups.

Preferred examples of such α,ω-functional polysiloxane(s) which are useful in the process for the manufacture of the hardener according to the present invention are:
aminopropyl-terminated polydimethylsiloxanes, aminobutyl-terminated polydimethylsiloxanes, aminopropyl-terminated polytrifluoropropylmethylsiloxane and isocyanatopropyl-terminated polydimethylsiloxanes; and amidopropyl-terminated polydimethylsiloxanes, amidobutyl-terminated polydimethylsiloxanes; and
nitrilopropyl-terminated polydimethylsiloxanes, nitrilobutyl-terminated polydimethylsiloxanes.

Although it is preferred to employ only a single α,ω-functional polysiloxane in the process for the manufacture of the anti-graffiti hardener, a mixture of one or more of such α,ω-functional polysiloxanes is also contemplated.

The amount of α,ω-functional polysiloxanes in relation to the component A is in the range 10 : 1 to 1 : 5, preferably from 5:1 to 4:1.

If in the hardener composition, component A is a polyisocyanate, and the component B comprises α,ω-amino-functional polysiloxane(s) having primary amino groups in the α,ω-positions, then the terminal primary amino groups of this α,ω-aminofunctional polysiloxane(s), prior to the admixing of component B in step ii) are chemically masked or blocked as ketimine groups by reacting the primary amino groups containing α,ω-amino-functional polysiloxane(s) with a ketone, thereby obtaining said ketimine group in the the α,ω-positions of the polysiloxane(s).

The ketimine group in this way chemically blocks the amino group of the α,ω-aminofunctional polysiloxane(s) used in the process for the manufacture of the harderer.

The protection or blocking described above is necessary when polyisocyanate is comprised in component A due to the fact that α,ω-amino-functional polysiloxanes having terminal primary amino groups, are highly reactive towards polyisocyanate.

The process of blocking the terminal primary amino groups of the α,ω-aminofunctional polysiloxane(s) as well as the primary amino groups of component A, if present, simply comprises refluxing said α,ω-amino-functional polysiloxane(s) and/or said primary amino groups containing compounds of component A, if present, in a suitable ketone.

Useful ketones for carrying out this blocking step are: isobutylmethyl ketone, methylethyl ketone and isobutylethyl ketone. Methylethyl ketone is preferred.

The technique for the blocking the amino group is a well-documented subject in the literature. For general overview and detailed description reference is made to: Brock, Groteklaes, Mischke, Lehrbuch der Lacktechnologie, Vincents, 1998, as well as the publications DE 2 546 536, DE 2 356 213, US 4 046 744, DE 1 694 237, DE 1 719 121.

When blending the resin and the hardener of the two component anti graffiti coating system according to the present invention, moisture from the air is getting in contact with the ketimine group of the blocked α,ω-amino-functional polysiloxane(s) (as well as the primary amino groups of component A, if present), and the amino groups will be reactivated by hydrolysis, thereby enabling said α,ω-amino-functional polysiloxane(s) (as well as the primary amino groups of component A, if present), - now having re-established its terminal primary amino groups - to react with the components of the resin. The same applies for the one component coating, if comprising blocked amino groups. The one component coating as well as the two component coating system are stored in closed containers prior to application thereof.

According to the process for the manufacture of the hardener of the present invention, one or preferably more solvents may be included in the mixing process. Most preferred three solvents are used comprising a low boiling, a medium boiling and a high boiling solvent. The definitions of a low boiling, a medium boiling and a high boiling solvents respectively are well known for a person skilled in the art of coatings. For a reference see e.g. Groteklaes, Mischke, Lehrbuch der Lacktechnologie, Vincents, 1998.

In a three-solvent system of the above type the high boiling solvent is preferably present in an amount of 5 - 15 %, such as 7 - 13 %, preferably 9 - 11 %, e.g. approximately 10%; and the medium boiling solvent is present in an amount of 20 - 40 %, such as 25 - 35 %, preferably 27 - 33 %, e.g. approximately 30%; and the low boiling solvent is present in an amount of 40 - 80 %, such as 50 - 70 %, preferably 55 - 65 %, e.g. approximately 60%. All percentages given are in wt% in relation to the total amount of solvent added in step iii) of the process for the manufacture of the inventive hardener.

The amount of solvent used in the process for the manufacture of the hardener according to the present invention, if present, is 0- 30%, preferably 10 - 20%.

If present, such solvents may be selected from the group comprising ethanol, n-propanol, isopropanol, n-butanol, isobutanol, methoxy-propanol, n-butylacetate, isobutylacetate, methylethylketon, methylisobutylketon, ethylacetate, xylene.

The addition of the solvent system comprising the above mentioned three-solvent system allows for controlling the tardiness of the curing of the final coating, the high boiling solvent mainly provides for preventing the coating system from drying.

Another way of controlling the tardiness and/or speed of curing of the final coating is by selecting the functional groups of the compounds of component A and component B respectively.

The order of reactivity of component A and B respectively depends of the actual functional group bounded to the compound. As well known isocyanate and primary amine groups offer a districts higher reactivity compared to secondary and tertiary amino groups as well as amido and nitrilo groups.

Optionally the hardener part of the anti-graffiti may include an UV light absorbing system. By including such UV light absorbing system, the surface to be protected against graffiti will also be protected against UV radiation when exposed to sun light.

The UV light absorbing system may be selected from a combination of a compound from the group comprising e.g. Tinuvin® 384, Tinuvin® 400 and a hindered amine light stabilizer (HALS), e.g. Tinuvin® 123 or Tinuvin® 292, all of which are commercially available from Ciba AG.

However, the type of the specific UV light absorbing system is not critically as long as the system does not detrimentally interfere with the other components of the resin. A person skilled in the art will be capable to select other useful UV light absorbing systems.

If included in the hardener, the UV light absorbing system will be present in an amount of 0.1 - 5 %, in relation to the hardener. It is however preferred to include the UV light absorbing system in the resin, if it is to be included in the coating system and/or the coating.

When the hardener in its active form (i.e. not in its blocked form) is mixed with the resin in order to obtain the anti-graffiti coating according the present invention the component A of the hardener acts as a cross linking / binding agent with the organofunctional silanol(s) and the binding agent (if present) included in the resin according to the present invention.

In a preferred embodiment according to the process for the manufacture of the hardener of the present invention the polysiloxane of component A of the hardener comprises terminal amino-groups and component B is an α,ω-amino-functional polysiloxane.

In another preferred embodiment according to the process for the manufacture of the hardener of the present invention the component A is 3-aminopropyltriethoxysilan (AMEO), and the component B is aminopropyl terminated polysiloxane.

In yet another preferred embodiment according to the process for the manufacture of the hardener of the present invention the component A is polyisocyanate and the component B is an ketimine blocked α,ω-amino-functional polysiloxane, namely aminopropyl terminated polysiloxane blocked with methylethyl ketone and the solvent of step iii) is n-butyl acetate.

In still another preferred embodiment according to the process for the manufacture of the hardener of the present invention, component A is a mixture of primary and secondary amino group containing organo siloxanes, and component B is an aminopropyl-terminated polydimethylsiloxane.

A fifth and sixth aspect of the present invention relates to a hardener obtainable by the process described above and the use of such hardener for an anti-graffiti coating system, respectively.

Thus, such hardener according to the present invention comprises a mixture of the following components:
i) a component A acting as binding/crossbinding agent, and comprising one or more siloxane(s) having amino, amido, isocyanate and/or nitrilo groups; and/or comprising polyisocyanate, said amino groups of said siloxane(s), if present as primary amino groups, optionally being blocked as ketimine groups; and
ii) a component B comprising one or more of an α,ω-amino-functional, α,ω-amido-functional, α,ω-isocyanate-functional and α,ω-nitrilo-functional polysiloxane, said amino groups of said α,ω-amino-functional polysiloxane, if present as primary amino groups, optionally being blocked as ketimine groups; and
iii) optionally one or more solvents; and
iv) optionally a UV light absorbing system;
with the proviso that if component A comprises polyisocyanate, then the terminal primary amino groups comprised in component B, if present, and/or the primary amino groups comprised in component A, if present, prior to the admixing in the hardener composition are protected by being blocked as ketimine groups.

Each component of said mixture being of the types stated above; and said mixture being manufactured as set out above.

### The anti-graffiti coating system

A seventh aspect of the present invention relates an anti-graffiti coating system comprising a resin of the above type and a hardener of the above type.

Thus, the coating system of the present invention merely consists of a kit-of parts of a resin and a hardener according to the present invention.

Accordingly, in one preferred embodiment the anti-grafitti coating is a 2-component coating system comprising a resin part and a hardener part of the above types, which are to be mixed immediately prior to the application thereof. The 2-component anti-graffiti system of the present invention can be stored separately in closed containers, and they are stable for at least 6 months.

In a preferred embodiment according to the present invention, the anti-graffiti coating system comprising a combination of:
- a resin obtainable by a process for the manufacture of the resin according to the present invention, wherein the nano-particle is selected from the group comprising organofunctional silanols having vinyl groups, epoxide groups, methacrylic groups, hydroxide groups, carboxylic groups and glycidyl groups; and wherein the binding agent, if present, is selected from the group of compounds comprising vinyl groups, epoxide groups, methacrylic groups, hydroxide groups, carboxylic groups and glycidylic groups; and wherein the alkyl siloxane having one or two alkyl chains comprising 1-18 carbon atoms, preferably 1 - 5 carbon atoms;
   and
- a hardener obtainable by a process for the manufacture of the hardener according to the present invention, wherein component A is a polysiloxane having terminal amino-groups, and wherein component B) is an α,ω-amino-functional polysiloxane..

### The anti-graffiti coating

In an eighth aspect the present invention relates to a process for the manufacture of an anti-graffiti coating comprising mixing a resin and a hardener of the above coating system and nn a ninth aspect the present invention relates to an anti-grafitti coating obtained by mixing a resin and a hardener of the above coating system.

In a preferred embodiment the anti-grafitti coating is a one component coating comprising a mixture of a resin and a hardener of the above coating system. It is possible to obtain one component coatings having a shelf life of at least 6 months when stored in a closed container.

The preferred way of obtaining a one component coating is by using compounds in component A and/or component B which comprise blocked primary amino groups (i.e. ketimine groups), thereby preventing the reaction of the hardener with the resin until moist and/or water is entering the coating.

Another way of obtaining a one component coating is - as described above - to control the tardiness and/or speed of curing by selecting appropriate substituent groups of component A and B respectively and/or by selecting appropriate amounts of solvent in the hardener.

The ratio of amounts of the resin part and the hardener part respectively depends on the specific types of resin and hardener used in the coating, i.e. the ratio depends on the number of reactive groups in each part.

Generally it should be ensured that the amount of hardener is sufficient to make it possible for essentially all reactive groups in the resin to react with the hardener.

In a preferred embodiment the ratio resin : hardener is within the range of 0.1 - 10, such as 0.2-5.

However a person skilled in the art will - on the basis of his knowledge as to the types and amounts of ingredients in the resin and hardener, respectively - be able to assess an appropriate mutual ratio of said resin and hardener.

### The use of the anti-graffiti coating for protection against graffiti-vandalism

A tenth aspect of the present invention relates to the use the anti-graffiti coating for coating a surface of a structure in order to protect said structure against graffiti vandalism.

By the use the application may be carried out by any conventional lacquering methods like e.g. spraying or rolling or by any other way which is available for a person skilled in the art. The coating may be cured at room temperature, whereby the components are cross-linked to each other, forming a 3-dimensional inorganic-organic coating network on the substrate surfaces. As soon as two hours after application the normal handling of the substrate surface is possible, and after only 12 hours of curing, a complete protection is provided. Alternatively the coating can be cured at an elevated temperature and in a shorter time, e.g. at 130 °C for one hour. Furthermore a fast hardening with IR-light is applicable too.

In case of application of the anti-graffiti coating onto the surface of a porous, absorbing substrate like non-treated brickwork or concrete, the use of a primer system before coating application is recommended. A recommended composition for this primer is a mixture of the the resin and hardener of example 3 with the exclusion of the α,ω-amino functional polysiloxane and with an increased concentration of 3-aminopropyltriethoxy silane.

In a preferred embodiment the coating is applied to said surface of said structure and cured for at least two hours at room temperature.

In a still preferred embodiment the applied coating has when cured a thickness of 1 - 20 µm, such as 5 - 10 µm.

Before the application of the two component coating the resin component and the hardener component are blended together in a predetermined amount and stirred. The one component coating may be used as is upon stirring.

The coating may be applied to any kind of material of any kind of surface of any kind of structure. In a preferred embodiment the coating is applied on the surface of a structure made of metal, wood, concrete, polymers, such as plastic, glass, lacquer, paint and/or brickwork.

If however the surface is rather porous, it will be advantageous to apply a primer to said surface prior to applying the anti-graffiti coating.

### The use of the anti-graffiti coating for other

The anti-graffiti coatings according to the present invention is however not resticted in use to applications against graffiti-vandalism.

Thus, in an eleventh aspect, the present invention relates to the use of the anti-graffiti coating for non-anti-graffiti, anti-adhesive purposes.

It has been found that the coatings according to the present invention are very useful in a wide range of other applications for coating of structures for which it is required that the surface of said structures must have a high degree of anti-adhesive properties.

### EXAMPLES

In the following examples all process steps were performed at room temperature, except when otherwise indicated.

Examples 1-5 describe the preparation of various coating compositions according to the present invention.

### Example 1

### Manufacture of a two component coating according to the invention

An epoxy-containing silane, 3-glycidyloxypropyltrimethoxy silane (GPTS), commercially available as GLYMO® from Degussa AG, is placed in a flask with agitator and and hydrolyzed with a 0,1 M HCl solution in the ratio 100 / 10. After the hydrolysis, Bisphenol A diglycidylether is added to the hydrolyzed GPTS in steps in a ratio GPTS / bisphenol A diglycidylether = 2 / 1. The mixture is stirred for at least 1 hour. After the mixture is getting clear, the alkylsiloxane n-propyltrimethoxy silane, commercially available as PTMO® from Degussa AG, is added in an amount of 35 % in relation to the GPTS/ bisphenol A diglycidylether-mixture and is stirred for 2 hours. After this procedure the first coating component, the resin part is obtained.

In order to achieve the additional UV protection of the substrate surface a UV light absorbing system comprising Tinuvin® 384 and a hindered amine light stabilizer (HALS), Tinuvin® 292 (both available from Ciba AG) is added to the resin part in the ratio 100 / 3 and 100 / 1.5 respectively.

The resin is finally stirred for 0.5 hours.

An α,ω-amino functional polysiloxane (DMS-A12 commercially available from Gelest Inc.) is placed in a flask with agitator. The amino-containing siloxan 3-aminopropyltriethoxysilane (AMEO® which is commercially available from Degussa AG) is added in a ratio 100 / 15 and stirred for 0.5 hours under the exclusion of air. After this procedure the second coating component, the hardener part is obtained.

The components can be stored stable for at least half a year in closed containers. Before the application of the coating system both components are mixed in a ratio of 100 / 20 and is stirred for 15 minutes.

### Example 2

### Manufacture of a two component coating according to the invention

An epoxy-containing silan, 3-glycidyloxypropyltrimethoxy silane (GPTS), commercially available as GLYMO® from Degussa AG, is placed in a flask with agitator and hydrolyzed with a 0,1 M HCl solution in the ratio 100 / 10. After the solution is getting clear the alkylsiloxan n-propyltrimethoxy silane, (PTMO® from Degussa AG) is added in an amount of 35 % and the mixture is stirred for 1 hour. Finally a catalytic agent, dibutyltindiacetate (DBTA from Sigma Aldrich) is added in a ratio 100 / 3 and the mixture stirred again for 1 hour. The resin is finally stirred for 0.5 hours. After this procedure the first coating component, the resin part is obtained.

A polyisocyanate Desmodur® N 3390 BA (commercially available from Bayer Materials Science AG) is placed in a flask with agitator. Afterwards the solvent n-butylacetate is added in a ratio of 100 / 70. The mixture is stirred for 1 hour. An methylethyl ketone blocked α,ω-aminopropyl polysiloxane (DMS-A12 from Gelest Inc. blocked by reaction with methylethylketone) is added in steps in a final ratio of 100/25. The mixture is stirred for 1 hour whereafter the second coating component, the hardener part is completed.

The components can be stored stable for at least half a year in closed containers. Before the application of the coating system both components are blended together in a ratio 100 / 20 and stirred for 30 minutes.

### Example 3

### Manufacture of a two component coating according to the invention

An epoxy group containing 3-glycidyloxypropyltrimethoxy silane (GPTS), commercially available as GLYMO® from Degussa AG, is placed in a flask with agitator and hydrolyzed with a 0,1 M HCl solution in the ratio 100 / 10. A hydroxyl group containing poly(meth)acrylate Macrynal® SM 516/70BAC (commercially available from UCB Speciality Chemicals Inc.) is placed in a second flask with agitator. The hydrolyzed GPTS is added to the poly(meth)acrylate in steps in a final ratio polyacrylate / GPTS = 1:1. The mixture is stirred for at least 1 hour in the closed flask. After the mixture is getting clear n-propyltrimethoxy silane, PTMO® from Degussa AG is added in an amount of 25 % and stirred for 1 hour in a closed flask. Finally a catalytic agent, dibutyltindiacetate (DBTA) (from Sigma Aldrich) is added in a ratio 100 / 3 and the mixture stirred again for 1 hour. The resin is finally stirred for 0.5 hours. After this procedure the first coating component, the resin part is obtained.

An α,ω-amino functional polysiloxane α,ω-aminopropyl terminated polydimethylsiloxane, (DMS-A12 from Gelest Inc.) is placed in a flask with agitator. An amino-containing siloxan, 3-aminopropyltriethoxy silane (AMEO® which is commercially available from Degussa AG) is added in a ratio 100 / 25 and stirred for 0.5 hours under the exclusion of air.

After this procedure the second coating component, the hardener part is obtained.

The components can be stored stable for at least half a year in closed containers. Before the application of the coating system both components are blended together in a ratio 100 / 20-40 and stirred for 15 minutes.

### Example 4

### Manufacture of a two component coating according to the invention

An epoxy group containing silane, 3-glycidyloxypropyltrimethoxy silane (GPTS), commercially available as GLYMO® from Degussa AG, is placed in a flask with agitator and hydrolyzed with a 0,1 M HCl solution in the ratio 100 / 10. A hydroxyl group containing poly(meth)acrylate,. Macrynal® SM 516/70BAC (commercially available from UCB Speciality Chemicals Inc.) is placed in a second flask with agitator. The hydrolyzed GPTS is added to the polyacrylate in steps in a final ratio poly(meth)acrylate : GPTS = 1 : 1. The mixture is stirred for at least 1 hour in the closed flask. After the mixture is getting clear an alkylsiloxan, n-propyltrimethoxy silane, PTMO® from Degussa AG, is added in an amount of 25 % and stirred for 2 hours in a closed flask. Finally a catalytic agent, dibutyltindiacetate (DBTA) (from Sigma Aldrich) is added in a ratio 100 / 3 and the mixture stirred again for 1 hour. The resin is finally stirred for 0.5 hours. After this procedure the first coating component, the resin part is obtained.

A polyisocyanate, Desmodur® N 3390 BA (commercially available from Bayer Materials Science AG), is placed in a flask with agitator. Afterwards the solvent. n-butylacetate is added in a ratio of 100 / 70. The mixture is stirred for 1 hour.

A ketimine blocked α,ω-amino functional polysiloxane (α,ω-aminopropyl polysiloxane, DMS-A12 from Gelest Inc. blocked by reaction with methylethylketone) is added in steps in a ratio of 100 / 25. The mixture is stirred for 1.5 hours in a closed flask. After this procedure the second coating component, the hardener part is completed.

The components can be stored stable for at least half a year in closed containers.

Before the application of the coating system both components are blended together in a ratio 100 / 50 and stirred for 20 minutes.

### Example 5

### Manufacture of a coating according to the invention which may be stored as a two component as well as a one component coating

The alkylsiloxane methyltrimethoxysilane, Dynasilan® MTMS from Degussa AG, is placed in a flask with reflux system, agitator and heating facility and hydrolysed with a 0.1 M HCl solution in the ratio 100/6. After stirring of the solution for 1 hour a 1:1 mixture of butylacetat and methoxypropanol is added to the silanol in an amount of 40% and stirred for 0.5 hours. In addition this mixture is heated to 50 °C. The hydroxyl group containing poly(meth)acrylate ®Macrynal SM 516/70BAC, UCB Specialty Chemicals Inc., is added under agitation and the mixture is stirred for at least 1 hour in the closed flask. After the mixture is getting clear an alkylsiloxane, n-propyltrimethoxy silane, Dynasilan® PTMO from Degussa AG, is added in an amount of 15 % and stirred for 2 hours in a closed flask. Finally a catalytic agent DBTL, Sigma Aldrich, is added in a ratio 100 / 2. The mixture is stirred for 1.5 hours in a closed flask. After this procedure the resin part of the coating system is obtained.

The reactive amino group containing organo silane Dynasil® 1204 from Degussa AG (a mixture of primary and secondary amino group containing organo siloxane) is placed in a flask with agitator. Afterwards an α,ω-amino functional polysiloxane, aminopropyl-terminated polydimethylsiloxane, DMS-A12 from Gelest Inc., is in steps added in a ratio of 30 / 100. The mixture is stirred for 1.5 hours in a closed flask. After this procedure the hardener of the coating system is obtained.

It is also possible to blend this coating system (i.e. blending the resin and the hardener) directly and to keep it as 1-component system. The pot-life in a closed container is up to 6 month.

### Example 6

### Testing the inventive anti-graffiti coating on test sheets

The coatings of example 1, 3 and 5 were each separately applied by spraying on test sheets of aluminum, painted aluminum, steel, and copper respectively, which subsequently underwent the following tests.

### 1. Exposure to organic solvents

The resistance towards organic solvents was tested by immersing the coated test sheets into the chosen solvent for 10 min. Tests were performed with acetone and xylene, in both cases no visible changes were inflicted on any of the coatings. Further evidence of the unchanged character of the coatings was established by comparing contact angel measurements obtained before and after the exposure to the solvent. Neither the expose to acetone nor xylene gave rise to variations in the contact angel measured.

### 2. Exposure to water, acid and base

Exposure of the coating to water for one day did not alter the chemical and physical properties of any of the coated surfaces. The coatings endured exposure to droplets of nital (3 % conc. HNO₃ in ethanol) for approximately 2 hours, before the underlying metal showed signs of penetration. Similar tests with a 2 % NaOH aqueous solution displayed signs of reaction with the coatings only after approx. 45 min. (bubbles in the droplets) and reaction with the metal after approx. 1½ hours of exposure.

### 3. Cross-cut test

Following the standards ASTM D3002, D3359 and DIN EN ISO 2409 the coatings underwent a cross-cut test obtaining best possible evaluation of adhesion. ISO class.: 0 / ASTM Class.: 5 B, indicating a very good adhesion of the coating systems to the chosen substrates.

### 4. Repeated application and removal of aerosol spray

Coated test sheets were spray painted by conventional aerosol alkyd paint, baked at 50 °C for 1 hour and kept at room temperature for 72 hours, before the cured paint was removed by Tesa® tape. The process was repeated 26 times for the coatings of example 1 and 3 without any degradation of the coating and no variation in the ease whereby paint was removed. The same result applies to the coating of Example 5.

However, due to the time consuming test protocol only five cycles were per performed with respect to the coating of example 5.

### 5. Removal of marker drawings

Drawings performed by a variety of markers were removed by Tesa® tape. Full recovery of the clean surfaces were obtained for all markers applied. Including: Faber-Castell, Multimark 1513 permanent F; Penol® 750 Permanent, Xylene-free; and Edding 750 Paint marker.

### Example 7

### Test of the inventive anti-graffiti coating according to example 1 and 3 respectively on larger test areas

The coatings were each applied by spraying on separate aluminum test sheets 1.5 x 1.5 m and on two masonry wall segments 1,5 x 1.5 m, where one was non treated and the second had a mortar finery.

Subsequently, three graffiti painters were invited to paint these test areas with aerosol sprays of their own selection. After keeping these areas at room temperature for 72 hours, the painting layers were removed by a water pressure gun system. All paints could be removed from both anti-grafitti coatings by that method. Only in the mortar joint of the masonry segments, especially at the non-coated segment, color splashes were left.

## Claims

1. A process for the manufacture of an anti-graffiti resin, comprising the mixing of:
i) one or more nano-particle sol(s) comprising nano-particles of organofunctional silanol(s) exhibiting reactivity towards amino, amide, nitrile or/and isocyanate groups; and
ii) optionally one or more organic binding agents exhibiting reactivity towards amino, amide, nitrile or/and isocyanate groups; and
iii) one or more alkyl siloxane(s), optionally substituted with fluorine atom(s) in the alkyl moity; and
iv) optionally a catalyst; and
v) optionally a UV light absorbing system.

2. A process according to claim 1, wherein the nano-particle is selected from the group comprising organofunctional silanols having vinyl groups, epoxide groups, methacrylic groups, hydroxide groups, carboxylic groups and glycidyl groups; and wherein the binding agent is selected from the group of compounds comprising vinyl groups, epoxide groups, methacrylic groups, hydroxide groups, carboxylic groups and glycidyl groups; and wherein the alkyl siloxane having one or two alkyl chains comprising 1-18 carbon atoms, preferably 1 - 5 carbon atoms.

3. A process according to claim 1 or 2, wherein the nano-particle comprises hydrolysed GPTS (3-glycidyloxypropyltrimethoxy silane) and wherein the binding agent is bisphenol A diglycidylether, and wherein the alkyl siloxane is n-propyltrimethoxysilane.

4. A process according to claim 1 or 2, wherein the nano-particle comprises hydrolysed GPTS (3-glycidyloxypropyltrimethoxy silane), and wherein the alkyl siloxane is n-propyltrimethoxy silane, and wherein dibutyltindiacetate (DBTA) is added as a catalyst in step iv), and wherein step ii) is omitted.

5. A process according to claim 1 or 2, wherein the nano-particle comprises hydrolysed GPTS (3-glycidyloxypropyltrimethoxy silane), and wherein the binding agent is a hydroxyl group containing poly(meth)acrylate, and wherein the alkyl siloxane is n-propyltrimethoxy silane.

6. A process according to claim 5, wherein dibutyltin diacetate (DBTA) is added as a catalyst in step iv).

7. A process according to claim 1 or 2, wherein the nano-particle comprises hydrolysed methyltrimethoxysilane, and wherein the alkyl siloxane is n-propyltrimethoxy silane, and wherein the binding agent is a hydroxyl group containing poly(meth)acrylate.

8. An anti-graffiti resin obtainable by a process according to any of the claims 1-7.

9. An anti-graffiti resin comprising one or more nano-particle sol(s) comprising organofunctional silanol(s) exhibiting reactivity towards amino, amide, nitrile or/and isocyanate groups; and optionally one or more organic binding agents exhibiting reactivity towards amino, amide, nitrile or/and isocyanate groups; and one or more alkyl siloxane(s), optionally substituted with fluorine atom(s) in the alkyl moity, wherein the binding agent(s) and the alkyl siloxane(s) are weakly linked to the hydroxylic group of the nano-particle silanol(s) by interactions via secondary bonds.

10. Use of an anti-graffiti resin according to any of the claims 8 or 9 for an anti-graffiti coating system.

11. A process for the manufacture of an anti-graffiti hardener, comprising the mixing of:
i) a component A acting as binding/crossbinding agent, and comprising one or more siloxane(s) having amino, amido, isocyanate and/or nitrilo groups; and/or comprising polyisocyanate, said amino groups of said siloxane(s), if present as primary amino groups, optionally being blocked as ketimine groups; and
ii) a component B comprising one or more of an α,ω-amino-functional, α,ω-amido-functional, α,ω-isocyanate-functional and α,ω-nitrilo-functional polysiloxane, said amino groups of said α,ω-amino-functional polysiloxane, if present as primary amino groups, optionally being blocked as ketimine groups; and
iii) optionally one or more solvents; and
iv) optionally a UV light absorbing system;
with the proviso that if component A comprises polyisocyanate, then the terminal primary amino groups comprised in component B, if present, and/or the primary amino groups comprised in component A, if present, prior to the admixing in the hardener composition are protected by being blocked as ketimine groups.

12. A process according to claim 11, wherein component A is a polysiloxane having terminal amino-groups, and wherein component B) is an α,ω-amino-functional polysiloxane.

13. A process according to claim 11 or 12, wherein component A is 3-aminopropyltriethoxy silane and wherein component B is an aminopropyl terminated polydimethylsiloxane.

14. A process according to claim 12, wherein component A is polyisocyanate and wherein component B is a ketimine blocked aminopropyl terminated polydimethylsiloxane, and wherein the solvent of step iii) is n-butyl acetate.

15. A process according to claim 12, wherein component A is a mixture of primary and secondary amino group containing organo siloxanes, and wherein component B is an aminopropyl-terminated polydimethylsiloxane.

16. An anti-graffiti hardener obtainable by a process according to any of the claims 11 - 15.

17. An anti-graffiti hardener comprising a mixture of:
i) a component A acting as binding/crossbinding agent, and comprising one or more siloxane(s) having amino, amido, isocyanate and/or nitrilo groups; and/or comprising polyisocyanate, said amino groups of said siloxane(s), if present as primary amino groups, optionally being blocked as ketimine groups; and
ii) a component B comprising one or more of an α,ω-amino-functional, α,ω-amido-functional, α,ω-isocyanate-functional and α,ω-nitrilo-functional polysiloxane, said amino groups of said α,ω-amino-functional polysiloxane, if present as primary amino groups, optionally being blocked as ketimine groups; and
iii) optionally one or more solvents; and
iv) optionally a UV light absorbing system;
with the proviso that if component A comprises polyisocyanate, then the terminal primary amino groups comprised in component B, if present, and/or the primary amino groups comprised in component A, if present, prior to the admixing in the hardener composition are protected by being blocked as ketimine groups

18. Use of an anti-graffiti hardener according to claim 16 or 17 for an anti-graffiti coating system.

19. An anti-graffiti coating system comprising a resin according to claim 8 or 9, and a hardener according to claim 16 or 17.

20. An anti-graffiti coating system according to claim 19 comprising:
a resin obtainable by the process according to claim 3, and a hardener obtainable by the process according to claim 13; or:
a resin obtainable by the process according to claim 4, and a hardener obtainable by the process according to claim 14; or:
a resin obtainable by the process according to claim 5, and a hardener obtainable by the process according to claim 13; or:
a resin obtainable by the process according to claim 6, and a hardener obtainable by the process according to claim 14; or:
a resin obtainable by the process according to claim 7, and a hardener obtainable by the process according to claim 15.

21. A process for the manufacture of an anti-graffiti coating comprising the mixing of a coating system according to claim 19 or 20.

22. An anti-graffiti coating comprising a mixture of the coating system of claim 19 or a mixture of the coating system of claim 20.

23. An anti-graffiti coating according to claim 22, wherein the ratio resin : hardener is within the range of 0.1 - 10, such as 0.2 - 5.

24. An anti-graffiti coating according to claim 22 or 23 in the form of a one component coating having a shell life of at least 6 months when stored in a closed container.

25. An anti-graffiti coating according to claim 24, comprising a mixture of a resin according to claim 8 or 9 and a hardener according to claim 16 or 17, wherein:
the resin comprises a nano-particle comprising hydrolysed methyltrimethoxysilane, and an alkyl siloxane comprising n-propyltrimethoxy silane, and a binding agent comprising a hydroxyl group containing poly(meth)acrylate; and wherein:
the hardener comprises a component A comprising a mixture of primary and
secondary amino group containing organo siloxanes, and a component B comprising an aminopropyl-terminated polydimethylsiloxane.

26. An anti-graffiti coating according to claim 24 comprising a mixture of a resin according to claim 8 or 9 and a hardener according to claim 16 - 17, wherein the component A of the hardener comprises one or more amino siloxanes having primary amino groups being blocked as ketimine groups; and/or wherein the component B of the hardener comprises one or more α,ω-amino-functional polysiloxanes having primary amino groups being blocked as ketimine groups.

27. Use of a coating according to any of the claims 22 - 26 for coating a surface of a structure in order to protect said structure against graffiti vandalism.

28. Use according to claim 27, wherein the surface of the structure comprises metal, wood, concrete, glass, lacquer, paint, brickwork, polymers, such as plastic.

29. Use according to claim 27 - 28, wherein the coating is applied to said surface of said structure and cured for at least two hours at room temperature.

30. Use according to any of the claims 27 - 29, wherein the applied coating when cured has a thickness of 1 - 20 µm, such as 5 - 10 µm.

31. Use of a coating according to any of the claims 22 - 26 for non-anti-graffiti, anti-adhesive purposes.
